Europäisches Patentamt

(19) European Patent Office

Office européen des brevets

(11) Publication number: **0 087 309**
**B1**

# EUROPEAN PATENT SPECIFICATION

(12)

(45) Date of publication of patent specification: **23.12.87**

(21) Application number: **83300897.2**

(22) Date of filing: **21.02.83**

(51) Int. Cl.⁴: **C 23 C 14/12,** C 23 C 14/26,
B 05 D 1/36

(54) Protected vapor-deposited metal layers.

(30) Priority: **22.02.82 US 350437**
**22.02.82 US 350722**
**22.02.82 US 350724**

(43) Date of publication of application:
**31.08.83 Bulletin 83/35**

(45) Publication of the grant of the patent:
**23.12.87 Bulletin 87/52**

(84) Designated Contracting States:
**BE CH DE FR GB IT LI**

(56) References cited:
**US-A-4 268 541**

(73) Proprietor: **MINNESOTA MINING AND
MANUFACTURING COMPANY
3M Center
Saint Paul, Minnesota 55101 (US)**

(72) Inventor: **Cederberg, Barbara M.**
**c/o Minnesota Mining and Manufacturing
Company**
**P.O. Box 33427 St. Paul Minnesota 55133 (US)**
Inventor: **Downing, Edward J.**
**c/o Minnesota Mining and Manufacturing
Company**
**P.O. Box 33427 St. Paul Minnesota 55133 (US)**
Inventor: **Fisch, Richard S.**
**c/o Minnesota Mining and Manufacturing
Company**
**P.O. Box 33427 St. Paul Minnesota 55133 (US)**

(74) Representative: **Bowman, Paul Alan et al
LLOYD WISE, TREGEAR & CO. Norman House
105-109 Strand
London WC2R OAE (GB)**

The file contains technical information
submitted after the application was filed and
not included in this specification

Courier Press, Leamington Spa, England.

0 087 309

## Description

### Background of the invention
### Field of the invention

This invention relates to vapor-deposited metal layers which are protected from damage by the application of an organic layer to its surface. The invention further relates to the process of applying the protective organic layer to the surface of the vapor-deposited metal layer and to the photosensitive articles made with the protected metal layer.

In particular, the present invention relates to the application of an organic layer onto the surface of a vapor deposited metal layer. The metal layer is generally formed on a supporting base by any of the various vapor-depositing techniques. Prior to subjecting the deposited metal layer to any physical treatments or stress likely to damage the continuity of the coating (e.g., rolling, folding, bending, and the like) an organic layer is vapor deposited onto the surface of the metal.

### Description of the prior art

Vapor-deposited layers of metals, particularly those on flexible webs, tend to be soft and easily rubbed off. These defects are particularly unacceptable where such layers are to be used as part of an imaging system consisting of a vapor-deposited metal layer and an over-coated photoresist or photopolymer layer. Marks, scuffs, kinks, or abrasions in the metal layer produce voids or areas in the film which contain no useful image, thus interrupting the faithfulness of the image. These photographic defective areas have been called by various names such as pinholes, cinch marks, scuffs, etc., depending on where and how the abrasion was produced. In order to avoid such defects, a protective resin layer is generally coated on the metal layer. This is often done in a separate coating operation on a different coating machine. The difficulty with this practice, however, is that the unprotected vapor-coated metal film must be wound after the vapor-coating operation to transport the material to the more conventional resin coater. Defects such as cinch marks, abrasions, and kinks are often produced during this winding operation.

In order to avoid the problems described above, several attempts have been made to vapor-deposit the metallic and organic layers in the same vacuum chamber, thus eliminating the need to wind the film in a roll between coating operations. One such process is described in U.S. 4,268,541. Here the vapor-deposition chamber is divided into 2 sections, by means of a partition, thereby separating the metal deposition area from the organic deposition section. Thus the organic protective layer is deposited over the metal layer without the need to rewind the roll in between the two coating operations.

The organic compounds used in U.S. Pat. 4,268,541 include polymers (for example, those derived from methacrylic acid and acrylic acid), low molecular weight organic compounds containing a carboxyl group (e.g., compounds such as abietic acid, isophthalic acid, behenic acid, terephthalic acid, phthalic acid, etc., and a few random compounds (e.g., Rhodamine B, rosin, a phthalocyanine, a monosaccharide, and an oligosaccharide).

The technique and materials described in U.S. 4,268,541 have been found to be suitable for only limited uses. The layer thickness of about 30—600 nm specified with those materials disclosed is not suitable for many imaging film constructions, and for many processing techniques. In particular, the friction properties of the coating cause layers of the coated material which are stacked or rolled to slide and move out of register. In rolled form, telescoping of the roll is quite serious. This can cause serious delays and expense in further use of the film.

Organic protection layers located between the metal layer and a photoresist layer can drastically affect the oxidizing or etching step and the quality of the resulting image. For example, excessive thickness of such layers may provide a preferential pathway for the developer or etch solution thereby resulting in image degradation or fine detail loss. This is especially true of material whose final designation is copy or contact reprographic work. Films such as these, called lith or contact films, depend on fine dot arrays to reproduce image tone. Fine dots (3 to 5%) may be undercut and etched away thereby degrading the quality of reproduction.

The relatively thick layer of some acid-containing protective materials such as disclosed in US—A—4 268 541 can also interfere with the etching of the metal by neutralising the alkaline metal etching solution. Such neutralisation inhibits the formation of an etched metal image and thus interferes with the formation of an image of acceptable quality.

Another attempt at overcoming the abrasion problems is described in Japanese Patent Publication No. 56/9736. In this case, the metal and the organic compound are deliberately coated as a single layer; i.e. the metal and organic vapours are substantially mixed in the vapour stream before they are deposited on the support. This is not completely satisfactory because the heated metal vapour can carbonise or decompose the organic material resulting in an unacceptable product. Also, the thickness of the layer is required to be at least 20 to 1000 mm. The scope of organic materials is also quite specific and generally emphasises organic acid materials.

According to the present invention there is provided a process for improving the abrasion resistance of a vapour deposited metallic layer which comprises vapour depositing a layer of material selected from metals, metal alloys, metal salts, metal compounds, semi-metals, semi-metal alloys, semi-metal salts, semi-metal compounds, semi conductor materials and combinations thereof, and before subjecting the

2

metallic layer to physical treatment or contact which would abrade the metallic layer, vapour depositing onto said metallic layer a layer of organic material comprising a) a carboxyl group, b) a saccharide, c) Rhodamine B, or d) phthalocyanine characterised in that said organic layer has a thickness of at least 1 nm and less than 30 nm.

The substrate may be any surface or material onto which metal may be vapour-deposited. The substrate may be rough or smooth, transparent or opaque, and continuous or porous. It may be of natural or synthetic polymeric resin (thermoplastic or thermoset), ceramic, glass, metal, paper, fabric, and the like. For the most commercial purposes the substrate is preferably a polymeric resin such as polyester (e.g. polyethyleneterephthalate), cellulose ester, polycarbonate, polyvinyl resin (e.g. polyvinylchloride, polyvinylidene chloride, polyvinylbutyral, polyvinylformal), polyamide, polyimide, polyacrylate (e.g. copolymers and homopolymers of acrylic acid, methacrylic acid, n-butyl acrylate, acrylic anhydride and the like), polyolefin, and the like. The polymer may be transparent, translucent or opaque. It may contain fillers such as carbon black, titania, zinc oxide, dyes, pigments, and of course, those materials generally used in the formation of films such as coating aids, lubricants, antioxidants, ultraviolet radiation absorbers, surfactants, catalysts and the like.

The vapor-deposited metal layer may be any vapor-deposited metal or metalloid layer. According to the practice of the present invention, the term metal layer is defined as a layer comprising metal, metal alloys, metal salts, and metal compounds. The corresponding meaning applies to the term metalloid layer. The term metal in metal layer is defined in the present invention to include semi-metals (i.e., metalloids) and semiconductor materials. Metals include materials such as aluminum, antimony, beryllium, bismuth, cadmium, chromium, cobalt, copper, gallium, germanium, gold, indium, iron, lead, magnesium, manganese, molybdenum, nickel, palladium, rhodium, selenium, silicon, silver, strontium, tellurium, tin, titanium, tungsten, vanadium, and zinc. Preferably the metal is selected from aluminum, chromium, nickel, tin, titanium and zinc. More preferably the metal is aluminum. Metal alloys such as aluminum-iron, aluminum-silver, bismuth-tin, and iron-cobalt alloys are included in the term metal layer and are particularly useful. Metal salts such as metal halides, metal carbonates, metal nitrates and the like are useful. Metal compounds such as metal oxides and metal sulfides are of particular utility in imaging systems. Metal layers comprising mixtures of these materials such as mixtures of metal-metal oxides, metal-metal salts, and metal salts-metal oxides are also of particular interest.

The thickness of the vapor-deposited metal layer depends upon the particular needs of the final product. In imaging constructions, for example, the thickness should be at least about 3 nm. Generally, the layer would be no thicker than 750 nm which would require a long etching period. A more practical commercial range would be between 10 and 500 nm. A preferred range would be between 20 and 400 nm and a more preferred range would be between 25 and 300 nm or 30 and 200 nm.

It is preferred that the majority of the cross-section of the metal layer consist essentially of metal, metal alloys, metal salts and metal compounds. Traces of up to 10% or more of other materials may be tolerated generally in the layer, and in fact in certain processes of manufacture the boundary region of the metal layer and the protective layer may have a graded or gradual change from 100% metal to 100% organic material. But metal layers with the majority (at least 50%) of its cross-section consisting essentially of metals, metal alloys, metal salts, metal compounds and combinations thereof are preferred. The metal layers should have fewer than 100, preferably fewer than 50, and more preferably fewer than 30 defects per 177 mm$^2$.

Vapor-deposition of the metal layer may be accomplished by any means. Thermal evaporation of the metal, ion plating, radio frequency sputtering, A.C. sputtering, D.C. sputtering and other known processes for deposition may be used in the practice of the present invention. The pressure may vary greatly during coating, but is usually in the range of $10^{-6}$ to $10^{-4}$ torr ($1.33\times10^{-4}$ to $1.33\times10^{-6}$ Pa).

The organic protective layer comprises a material selected from the group consisting of organic materials having 1) carboxyl groups, 2) saccharide, or 3) phthalocyanine. Preferably these materials have a vapor pressure at 20°C which is not higher than that of 1-n-octanol. The term "organic material" is used because the protective coating does not have to be a single compound or a monomeric compound. In addition to those types of materials, dimers, trimers, oligomers, polymers, copolymers, terpolymers and the like may be used.

The organic materials containing a carboxyl groups, for example, include aliphatic carboxylic acids, aromatic carboxylic acids, polycarboxylic acids and the like as described in U.S. Patent 4,268,541.

The organic material should be vapor-depositable as this is the general method preferred for application of the protective layer. The organic material may, for example, be deposited in the apparatus and procedures disclosed in U.S. Patent No. 4,268,541. The partition or baffle described in that apparatus (e.g., Example 1) has not been found to be essential. The two vapor streams (i.e., metal and organic material streams) may be physically spaced apart or directed so that the coating zones for the two materials do not completely overlap. No serious problem has been found even when 50% of each of the coating zones overlap (so that at least 50% of the thickness of the metal layer consists essentially of metal, metal salts, metal compounds, and combinations thereof), although this is not a preferred construction. It is preferred that less than 25% of the total weight of the metal component be in such an overlapping or mixing zone and more preferably less than 10% or even 0% be in such zones. The recitation of a metal layer in the practice of the present invention requires, however, that at least a region of the coating, usually adjacent to the substrate, consists essentially of a metal layer without a dispersed phase of organic material therein.

The photoresist layer may be either a negative-acting or positive acting photoresist as known in the act. Positive acting photoresist systems ordinarily comprise polymeric binders containing positive acting diazonium salts or resins such as those disclosed, for example, in U.S. Patents Nos. 3,046,120, 3,469,902 and 3,210,239. The positive acting photosensitizers are commercially available and are well reported in the literature. Negative acting photosensitive resist systems ordinarily comprise a polymerizable composition which polymerizes in an imagewise fashion when irradiated, such as by exposure to light. These compositions are well reported in the literature and are widely commercially available. These compositions ordinarily comprise ethylenically or polyethylenically unsaturated photopolymerizable materials, although photosensitive epoxy systems are also known in the art. Preferably ethylenically unsaturated photopolymerizable systems are used, such as acrylate, methacrylate, acrylamide and allyl systems. Acrylic and methacrylic polymerizable systems are most preferred according to the practice of the present invention. U.S. Patents Nos. 3,639,185, 4,247,616, 4,008,084, 4,138,262, 4,139,391, 4,158,079, 3,469,982, U.K. Patent No. 1,468,746, disclose photosensitive compositions generally useful in the practice of the present invention. U.S. Patent No. 4,314,022 discloses etchant solutions particularly useful in the practice of the present invention.

Light-sensitive imaging elements of the present invention can be provided with a print-out image system by bonding a layer which is at least partially impervious to the generated gas on the surface of the layer generating the gas. The print-out system can be provided by adding a gas-generating light-sensitive material to the top layer and then overcoating the top layer with a gas-impermeable film.

The temporary image formed by the construction of the present invention is provided between the layer containing the photosensitive gas-generating material and the barrier layer. This is significantly different from normal vesicular imaging in which the bubbles of gas are usually trapped within the layer which generates the gas.

The barrier layer also does not have to be completely impervious to the generated gas. This is because the quasi-vesicular image formed is only temporarily required and may in fact desirably wash away (e.g., by removal of the barrier layer) in subsequent development or etching baths. The image formed can also be allowed to disappear by migration and evacuation of the temporarily trapped print-out image forming gas from beneath the barrier layer. The barrier layer therefore need only be sufficiently impermeable to the generated gas to provide an image for a few minutes. Thus a top coat over the gas-generating layer which had a mass transfer constant or permeability constant as defined in U.S. Patent No. 3,032,414 of not greater than

$$P_{max}=1\times10^{-9} \ [cm^3 \ cm^{-2} \ sec^{-1} \ (cm \ Hg/cm^{-1})]$$

preferably $1\times10^{-10}$ and more preferably $8\times10^{-10}$. This constant must be satisfied by the binder component of the layer if used as such, or by the layer with a modifier admixture added to a binder.

The mass transfer constant or permeability constant is defined as the number of cubic centimeters of gas transmitted by the unit area of 1 square centimeter during 1 second at constant, such as room, temperature, when the pressure gradient is 1 cm of Hg per cm of the thickness of a vehicle layer of a given material.

While the above upper limit of $P=8\times10^{-10}$ is fairly critical, a lower limit is not equally well defined or critical; however, materials with constants below $P_{min}=8.6\times10^{-16}$ in most instances will be unsatisfactory.

The above values for P are referred to temperatures of approximately 30°C. They also generally refer to nitrogen, the gas which is at the present time most practical for purposes of scatter photography, although other gases such as $CO_2$ have been used. These P values for nitrogen diffusion however are, within the range specified, sufficiently close to those for other gases so that they serve satisfactorily for selecting a proper unmodified vehicle or for compounding with a modifier a vehicle that in itself does not conform to this permeability requirement.

The above permeability limits determine usefulness mainly as to photographic sensitivity and resolution. In general, these improve as the permeability is reduced. Furthermore copies which are thermally stable at ordinary storage temperatures are obtainable within these permeability ranges. To increase permeability with a modifier to permit fixing, an alternate type of modification is possible. A given resin may have permeability higher than the upper limit of the operating range. This can be brought within the operating range by adding a modifier of low permeability. Thus the modifier is a method of adjusting the over-all permeability to some desired value.

The hardness of the vehicle polymer is not very critical with regard to permanence, since it is usually removed.

Vehicle materials according to the invention are further characterized, in purely physical, structural, terms, as primarily highly linear and saturated hydrocarbon chains essentially without crosslinking, such as obtained by polymerization of monomers with substituent groups preferably of small dimensions, made up of only a few elements and few atoms, and in many cases of a moderately electronegative character, imparting the polymer with a certain amount of polarity, or strong interchain cohesion, favoring close molecular fit and crystallinity, with closely adjacent molecule portions forming randomly distributed elementary structures interspersed with randomly distributed areas of lower coherence. These low cohesion areas are believed to constitute, or at least to favor the formation of, nucleating areas where the above described gas units tend to form. Many of the usable materials result from the interpolymerization of two ethylenic monomers resulting in the desirable properties of solubility, and color stability.

The gas-generating material may be any light-sensitive compound or mixture of compounds which generates a gas at standard temperature and pressure when irradiated. Halogen gas liberators, carbon monoxide or carbon dioxide liberators and any other such light sensitive gas generators would be useful. Most preferred is the well-known nitrogen liberator, photosensitive diazonium salts. The term photosensitive diazonium salts refers to all light-sensitive, aromatic diazonium compounds which generate nitrogen gas when struck by electromagnetic radiation, particularly in the visible, ultraviolet and infrared portion of the spectrum. This includes diazo quinones (encompassing diazo oxides and diazo amides, and diazo sulfides) as well as the more conventional light sensitive aromatic diazonium salts having simple or complex anions. These materials are well-known in the art as represented in U.S. Patent Nos. 4,247,616; 4,193,797; 4,189,320; 4,039,521; and 3,282,939 as well as in *Light-Sensitive Systems*, Kosar, John Wiley and Sons, Inc., 1965, pp. 202—214 and 276—282.

The various photosensitive imaging systems known to use these gas-generating materials which can make use of the present invention include for example, positive-acting photoresist systems (e.g., U.S. Patents 4,247,616 and 4,193,797), negative acting photoresists, and lithographic compositions (e.g., U.S. Patent 4,104,072 and Belgian Patent No. 881,956), diazonium-coupler dye forming systems (e.g., U.S. Patent Nos. 4,230,7891; 4,168,171; 3,754,916; and 3,199,982) and dye bleach systems or leuco dye oxidation system as known in the art. Each of these systems uses a diazonium salt as an ingredient in a light-sensitive non-vesicular layer.

The invention may be most readily practiced by bonding the layer which is resistant to penetration of nitrogen gas as close as possible to or directly on the surface of the layer containing the gas generating photosensitive compound. Thus, the barrier is contiguous to the gas-generating layer. The best mode of positioning the barrier layer is on the surface of the imaging, gas-generating layer. The presence of intermediate layers, such as primer layers, tends to allow the gas to diffuse horizontally and reduce the quality of the image. In any case, intermediate layers should be less than 0.1 mm in thickness and preferably less than 0.05 mm. The intermediate layer should be permeable to nitrogen, for if it is not, it will act in the manner of a barrier layer and form a temporary image.

The barrier layer may be any natural or synthetic organic polymeric optically transmissive layer. Transparent binders and polymers such as polyvinyl alcohol, polyvinyl pyrrolidone, gelatin, methyl vinyl ether copolymers, polyvinylidene chloride, acrylic latexes, and the like are most preferred. It is also particularly desirable to use solvent system in laying down the barrier layer which do not penetrate the image forming layer. Since many imaging systems use organic solvent, a water-soluble or water-dispersible top-coat, for example, those of polyvinyl alcohol or polyvinylpyrollidone or various latices are particularly desirable. It is generally preferred that the barrier layer be transparent, but these are circumstances where translucency or transparency to only a limited range or wavelengths would be desirable. As long as the barrier layer allows some activating energy and preferably as portions of the visible spectrum to pass therethrough, the print-out image can be visible. The barrier layer is generally between 0.05 and 300 micrometers and preferably between 0.05 and 20 micrometers, more preferably between 0.10 and 5.0 and most preferably between 0.10 and 1.0 microns.

In a preferred practice of the invention, matting agents are added to the barrier layer. This provides a non-glossy appearance to the imageable element and can provide a control on the friction characteristics of the surface. Furthermore, if the material is to be stacked or rolled, the protuberance of the matting agent will prevent or reduce adherence between layers caused by the exclusion of air between them. Typical photographic matting agents such as polymethylmethacrylate and its copolymers, silica, and the like are generally useful.

One particularly beneficial side effect of the present invention with positive resist systems is enhanced developability in the imaged (irradiated) areas. This occurs because the vesicles produced by the generated gas are coincident with the more readily washed away portions of the light sensitive layer. The top coat is therefore most easily removed in the exposed areas because of reduced adhesion where the positive-acting radiation sensitive layer ia also most readily etched or washed away.

The following Examples further illustrate practice of the present invention.

The apparatus used in the following Examples is disclosed in US Patent 4268541. In the vapour depositing step, a roll of a long strip of a support is mounted on a delivery spindle in a vacuum vessel, and disposed so that by conveyor mechanism, the support is delivered continuously from the delivery spindle, passes a vapour deposition chamber for a metal, a metal alloy, or a metal compound as an evaporating material and then a vapour depositing chamber for an organic material, and wound up on a wind-up spindle. The inside of the vacuum vessel is maintained at a high vacuum of about $10^{-3}$ torr ($1.33 \times 10^{-3}$ Pa) to about $10^{-6}$ torr ($1.33 \times 10^{-6}$ Pa) by means of an evacuation device. While continuously conveying the support by delivering the support from the delivery spindle and winding the support up on the wind-up spindle, a metal, a metal alloy or a metal compound (to be referred to hereinafter simply as a metal) is evaporated by a heating device provided in the vapor deposition chamber, and the resulting vapour is deposited and condensed on the surface of the support to form a metallic layer. Then, in a vapour deposition chamber in which a conveyor roll is not used between this chamber and the metal deposition chamber, an evaporable organic material is evaporated by a heating device provided in the chamber, and the vapour of the organic material is deposited and condensed on the metallic layer to form a layer of the organic material. After vapour deposition of the organic material, the coated support is wound up in a roll on the wind-up spindle via conveyor rolls, if desired.

In the preferred embodiment of the process of US Patent 4,268,541 a metallic layer is formed by vapour deposition in the same manner as described above, and then, in a chamber for vapour depositing an organic material with a partition between this chamber and the metal vapour depositing chamber but without any conveyor roll therebetween, and evaporable organic material is evaporated by a heating device provided therein, and the resulting vapour is deposited and condensed on the metallic layer previously formed. After the formation of such an organic material layer by vapour deposition, the material is wound up in a roll form on a wind-up spindle, if desired via conveyor rolls. However, the presence of a partition is not essential.

The developer used in the Examples is a processing solution described in Example 1 of US Patent 4,314,022 and comprises a basic bath solution consisting of 0.6M solium hydroxide and 0.2M sodium carbonate. 0.20 grams of a chelating agent for aluminium ion having a stability constant greater than 6.7 were added to each 10 ml aliquot of the bath and the volumes increased to 20 ml with additional amounts of basic bath solution. The pH was adjusted with sodium hydroxide to 13.3 and maintained at 38°C.

Example 1 (Comparative)

Using the apparatus of U.S. Patent No. 4,268,541 described above without a partition, a $10^{-4}$m polyester web was coated by vacuum deposition with 70 nm of aluminum. During the same operation in the same vacuum chamber a layer of a commerically available terpolymeric acrylate material (derived from 62% methylmethacrylate, 36% n-butylacrylate and 2% acrylic acid by weight) was applied. This sample represents an article made according to the teachings of U.S. Patent 4,268,541. A control length of non organic-coated aluminum film was also produced. Ellipsometric measurements of the resultant organic/metal package indicated that the thickness of the acrylate layer was 30.5 nm.

The resultant aluminum plus organic coated material was examined by way of transmitted light and exhibited very few pinholes or defects. The otherwise soft aluminum layer of this package could not be rubbed off using thumb pressure. The non organic coated aluminum film could be rubbed off using thumb pressure.

Both the organic vapour coated sample and the unprotected sample were immersed in a bath of 1.2% sodium hydroxide and 3% of the tetra sodium salt of nitrilotriacetic acid at 32°C. The unprotected Al layer was uniformly, cleanly oxidized away in 15 seconds. The organic-protected layer was not cleanly removed. In fact, the aluminum lifted off in sections during the immersion time and then the aluminum generally oxidized in solution.

Example 2

Using the apparatus of Example 1, a coating was made on top of a 70 nm aluminum layer using terephthalic acid as the organic layer. The organic layer was applied to produce an organic layer of about 5 nm thickness as determined by a Gaertner Ellipsometer.

The web was further coated with a resist layer. A control web consisting of only the 70 nm aluminum layer was additionally prepared.

After coating and drying these films were exposed to a 10 step Stauffer grey scale using a 2 kw Berkey Ascor printing source (light to film distance 1 mtr) for 15 seconds. The exposed films were developed in the processing solution described in Example 1 of US—A—4 314 022 for 30 seconds, at 38°C followed by a warm water wash. On inspection it was evident that the control film had a grey scale value of step 5, the terephthalic acid roll however had a grey scale value of 7 indicating a faster, more uncontrolled development.

Example 3

Using the technique described in Example 1, 4 separate, 30 meter, $10^{-4}$m polyester base samples were continuously vapour-coated with aluminum (thickness 70 nm). One of these was additionally vapour-coated (in the same pass time and vacuum chamber as the Al layer) with a 30 nm layer of a 62/36/2 methylmethacrylate/n-butylacrylate/acrylic acid terpolymer (henceforth called Sample A). The second web was additionally vapour-coated with a 30 nm layer of terephthalic acid (in the same pass time and vacuum chamber as the aluminum layer—henceforth called Sample B). The third sample called C was made identical to Sample B but the thickness of terephthalic acid was reduced to 10 nm. The 4th sample (D) was not overcoated with an organic protective layer. All of the above webs were wound up in vacuum under a tension equal to 40 lbs. (18.14 kg).

Sections of all of the samples were unrolled and viewed on a graphic light source and inspected using a 10× hand magnifying glass. Scratches, cinch mark, and other defects were counted on different areas of each web.

Select areas of 177 mm² were viewed and the defects counted. Table 1 list the defect levels of each web.

TABLE 1

| Sample | Defect level |
|--------|--------------|
| A | 18 |
| B | 17 |
| C | 17 |
| D | 100 |

All of the above webs were coated with the photoresist at a coating weight of 281 mg/ft$^2$ (3122 mg/m$^2$). After coating, each of these samples was exposed to a 10 step Stauffer grey scale using a Berkey Ascor 2kw commercial light source (lamp to film distance 1 meter) using a metal halide lamp for a period of 15 seconds. After exposure, these films were developed in a Graphic Arts rapid access processor. Processing conditions include a 60 second development time using the developer solution of Example 1 of U.S. Patent No. 4,314,022 at 39°C followed by a 30 second wash cycle. The 10 Step grey scale reproductions on each of these films was examined. Table 2 details these results.

TABLE 2

| Sample | Steps seen | Comments |
|--------|-----------|----------|
| A | 2 | Large areas removed non imagewise |
| B | 7 | 3—5% dots undercut |
| C | 4 | Good sharp 3% dots |
| D | 4 | Equal dots to sample C |

These data clearly indicate that the higher coating levels of organic protective material taught in U.S. Patent 4,268,541 interfere with development, producing inferior reproductions, although they adequately protect the Al web from defects.

Example 4

Using the technique described in Example 1, eight separate, 30 m polyester base samples were continuously vapor-coated with different metals of nominally the same thickness as in Example 1. One sample of each of the following metal layers was overcoated with a protective layer.

| Sample | Metal |
|--------|-------|
| 1 | Tin |
| 2 | Copper |
| 3 | Aluminum |
| 4 | Aluminum/magnesium (Al 94.8%; Mg 5.0%; Mn 0.1%; Cr 0.1%) |
| 5 | Al$_2$Fe$_5$ |

The protected layer films had a 8 nm layer of terephthalic acid vapor-coated on top of the metal layer. At the same time, the metal layer was vapor-coatd in the same pass and vacuum chamber. A 10× inspection of a 177 mm$^2$ area of each of the webs placed over a lighted table indicated the following defect levels.

Defects counts/177 mm² area

| Metal | Protected layer | Unprotected layer |
|---|---|---|
| Tin | 19 | 170 |
| Copper | 22 | 163 |
| Aluminum | 18 | 135 |
| Aluminum/magnesium | 20 | 142 |
| Aluminum/iron | 19 | 150 |

Example 5

Using the technique of Example 1, several different materials were in-line, in situ vapor-coated on top of a 70 nm layer of aluminum at the time the aluminum layer was applied. These were applied in 2 levels, a level of 8 nm and a level of 30 nm and wound up in a roll from under a take-up roll tension of 40 pounds (18.14 kg).

1) Terephthalic acid
2) Salicylic acid
3) Terpolymer of 62% by weight methyl methacrylate, 36% n-butylacrylate, and 2% acrylic acid
4) Behenic acid

After application, each of these samples were perused with a 10X hand lens and defect counts conducted in areas of 177 mm². The following table details the observation of these studies as well as additional notes. The data was compared to a web coated with aluminum of the same thickness and at the same thickness and at the same time as the other samples.

Defects counts on treated vapor-coated metal layers

| Material | Untreated | Level 8 nm | Level 30 nm | Notes |
|---|---|---|---|---|
| Unprotected Aluminum | 1000 | ——— | ——— | ——— |
| Terephthalic acid | ——— | 20 | 23 | 30 nm level; powdery, not optically clear; both slippery. |
| Salicylic acid | ——— | 23 | 22 | 30 nm level; slippery; roll telescoped. |
| Acrylate Terpolymer | ——— | 18 | 21 | removed from base in chunks by developer (30 nm) |
| Behenic acid | | 20 | 23 | 30 nm level tacky. |

The above data show that the thickness range of 8 to less than 30 nm provides excellent protection against abrasion defects but that the thicker layer tends to create other difficulties such as reduced optical clarity, excessive slipperiness and tackiness.

**Claims**

1. A process for improving the abrasion resistance of a vapour deposited metallic layer which comprises vapour depositing a layer of material selected from metals, metal alloys, metal salts, metal compounds, semi-metals, semi-metal alloys, semi-metal salts, semi-metal compounds, semi conductor materials and combinations thereof, and before subjecting the metallic layer to physical treatment or contact which would abrade the metallic layer, vapour depositing onto said metallic layer a layer of organic

# 0 087 309

material comprising a) a carboxyl group, b) a saccharide, c) Rhodamine B, or d) phthalocyanine characterised in that said organic layer has a thickness of at least 1 nm and less than 30 nm.

2. A process as claimed in Claim 1, characterised in that at least 75% of the thickness of the metallic layer consists of a material selected from metals, metal compounds, metal salts and combinations thereof.

3. A process as claimed in Claim 2, characterised in that the metallic layer consists of a material selected from metals, metal compounds, metal salts and combinations thereof.

4. A process as claimed in any preceding claim, characterised in that the organic material is selected from aliphatic carboxylic acids, aromatic carboxylic acids, and acrylic or methacrylic polymers or copolymers.

5. An article comprising a substrate having on at least one surface thereof a vapour deposited metallic layer comprising a material selected from metals, metal alloys, metal salts, metal compounds, semi-metals, semi-metal alloys, semi-metal salts, semi-metal compounds, semi conductor materials and combinations thereof, and adhered to the metallic layer a layer of organic material comprising a) a carboxyl group, b) a saccharide, c) Rhodamine B, or d) phthalocyanine, characterised in that said organic layer has a thickness of at least 1 nm and less than 30 nm.

6. An article as claimed in Claim 5, characterised in that the metallic layer consists of a material selected from metals, metal compounds, metal salts and combinations thereof.

7. An article as claimed in Claim 5 or Claim 6 having coated over said organic material a photoresist layer.

## Patentansprüche

1. Verfahren zur Verbesserung der Abriebfestigkeit einer aus der Gasphase abgeschiedenen Metallschicht, umfassend die Abscheidung einer Schicht aus einem Material, ausgewählt aus Metallen, Metallegierungen, Metallsalzen, Metallverbindungen, Halbmetallen, Halbmetallegierungen, Halbmetallsalzen, Halbmetallverbindungen, Halbleitermaterialien und Kombinationen davon, aus der Gasphase und bevor die Metallschicht einer physikalischen Behandlung oder einem Kontakt ausgesetzt wird, bei dem die Metallschicht abgerieben wurde, Abscheidung einer Schicht aus einem organischen Material, das a) eine Carboxylgruppe, b) ein Saccharid, c) Rhodamin B oder d) Phthalocyanin umfaßt, aus der Gasphase auf die Metallschicht, dadurch gekennzeichnet, daß die organische Schicht eine Dicke von mindestens 1 nm und von weniger als 30 nm aufweist.

2. Verfahren nach Anspruch 1, dadurch gekennzeichnet, daß mindestens 75% der Dicke der Metallschicht aus einem Material besteht, das ausgewählt ist aus Metallen, Metallverbindungen, Metallsalzen und Kombinationen davon.

3. Verfahren nach Anspruch 2, dadurch gekennzeichnet, daß die Metallschicht aus einem Material besteht, das ausgewählt ist aus Metallen, Metallverbindungen, Metallsalzen oder Kombinationen davon.

4. Verfahren nach einem der vorstehenden Ansprüche, dadurch gekennzeichnet, daß das organische Material ausgewählt ist aus aliphatischen Carbonsäuren, aromatischen Carbonsäuren und Acryl- oder Methacrylpolymerisaten oder Copolymerisaten.

5. Gegenstand, umfassend ein Substrat, das auf mindestens einer seiner Oberflächen eine aus der Gasphase abgeschiedene Metallschicht aufweist, die ein Material umfaßt, das ausgewählt ist aus Metallen, Metallegierungen, Metallsalzen, Metallverbindungen, Halbmetallen, Halbmetallegierungen, Halbmetallsalzen, Halbmetallverbindungen, Halbleitermaterialien und Kombinationen davon und verbunden mit der Metallschicht eine Schicht aus einem organischen Material, das a) eine Carboxylgruppe, b) ein Saccharid, c) Rhodamin B oder d) Phthalocyanin umfaßt, dadurch gekennzeichnet, daß die organische Schicht eine Dicke von mindestens 1 nm und von weniger als 30 nm aufweist.

6. Gegenstand nach Anspruch 5, dadurch gekennzeichnet, daß die Metallschicht aus einem Material besteht, das ausgewählt ist aus Metallen, Metallverbindungen, Metallsalzen und Kombinationen davon.

7. Gegenstand nach Anspruch 5 oder 6 mit einer auf dem organischen Material aufgebrachten Photoresist-Schicht.

## Revendications

1. Procédé pour l'amélioration de la résistance à l'abrasion d'une couche métallique déposée en phase vapeur, qui comprend le dépôt en phase vapeur d'une couche d'une matière choisie parmi les métaux, les alliages métalliques, les sels de métaux, les composés métalliques, les semi-métaux, les alliages de semi-métaux, les sels de semi-métaux, les composés semi-métalliques, les matières semiconductrices, et leurs combinaisons, et, avant de soumettre la couche métallique à un traitement ou contact physique qui provoquerait une abrasion de la couche métallique, le dépôt en phase vapeur sur cette couche métallique d'une couche d'une matière organique comprenant (a) un groupe carboxyle, (b) un saccharide, (c) de la Rhodamine B, ou (d) de la phthalocyanine, caractérisé en ce que cette couche organique a une épaisseur d'au moins 1 nm et de moins de 30 nm.

2. Procédé suivant la revendication 1, caractérisé en ce qu'au moins 75% de l'épaisseur de la couche métallique consistent en une matière choisie parmi les métaux, les composés métalliques, les sels de métaux, et leurs combinaisons.

**0 087 309**

3. Procédé suivant la revendication 2, caractérisé en ce que la couche métallique consiste en une matière choisie parmi les métaux, les composés métalliques, les sels de métaux, et leurs combinaisons.

4. Procédé suivant l'une quelconque des revendications précédentes, caractérisé en ce que la matière organique est choisie parmi les acides carboxyliques aliphatiques, les acides carboxyliques aromatiques, et les polymères ou copolymères acryliques ou méthacryliques.

5. Article comprenant un support comportant, sur au moins l'une de ses surfaces, une couche métallique déposée en phase vapeur, comprenant une matière choisie parmi les métaux, les alliages métalliques, les sels de métaux, les composés métalliques, les semi-métaux, les alliages de semi-métaux, les sels de semi-métaux, les composés de semi-métaux, les matières semiconductrices, et leurs combinaisons, et, adhérant à la couche métallique, une couche de matière organique comprenant (a) un groupe carboxyle, (b) un saccharide, (c) de la Rhodamine B, ou (d) de la phthalocyanine, caractérisé en ce que cette couche organique a une épaisseur d'au moins 1 nm et de moins de 30 nm.

6. Article suivant la revendication 5, caractérisé en ce que la couche métallique consiste en une matière choisie parmi les métaux, les composés métalliques, les sels de métaux, et leurs combinaisons.

7. Article suivant la revendication 5 ou la revendication 6, comportant en revêtement sur la matière organique susdite, une couche de photoréserve.